# EUROPEAN PATENT SPECIFICATION

(11) **EP 3 330 035 B1**
(45) Date of publication and mention of the grant of the patent: **31.08.2022**
(21) Application number: 17203838.2
(22) Date of filing: 27.11.2017
(51) Int. Cl.: B23K 26/03, B23K 26/14, B23K 26/16, B23K 26/342, B23K 26/144, B23K 26/142, B23K 26/082

(54) **LASER CLADDING SYSTEM AND METHOD**
LASERPLATTIERUNGSSYSTEM UND -VERFAHREN
SYSTÈME ET PROCÉDÉ DE REVÊTEMENT AU LASER

(30) Priority: 28.11.2016 US 201615362016
(43) Date of publication of application: 06.06.2018
(73) Proprietor: Raytheon Technologies Corporation, Farmington, CT 06032 (US)
(72) Inventor: LIN, Wangen, S. Glastonbury, CT Connecticut 06073 (US); BOYNTON, Scott Lewis, East Windsor, CT Connecticut 06088 (US); BROWN, Alex Neese, Windsor Locks, CT Connecticut 06096 (US)
(74) Representative: Dehns

(56) References cited:
- EP-A1- 2 711 759
- US-A1- 2004 238 504
- US-A1- 2011 297 083
- US-A1- 2012 261 393

## Description

### BACKGROUND

Laser powder deposition is commonly used in manufacture and repair methods in the aerospace industry, particularly for large, high-value castings that are too crack sensitive to be welded via conventional processes. Laser cladding heads spray pulverant towards an area to be joined or repaired, while a laser beam (typically received via an optical fiber line) creates a small melt pool on the surface of the workpiece. This melt pool captures and incorporates some of the powder. Lasers in such systems can be tightly focused, enabling precise deposition of powder in a target area (e.g. along a weld seam, or to repair a crack or inclusion arising during manufacture or operation of a workpiece).

Common weld heads consist of two concentric hollow cones separated by a small gap. Metal powder, carried by an inert gas such as helium, exits between these cones and is focused on a target point of the workpiece. A laser is simultaneously focused at the same target point through the center of the inner cone. In these systems, conical powder jets are disposed coaxially about the laser beam, and additional inert gas is often directed substantially along the same axis to the molten puddle at the target point to protect from oxidation while powder is deposited.

Coaxial laser cladding heads are typically quite long (e.g. 500mm or more), and are consequently unsuitable for applications where obstructions near the target point block access, such as when performing a weld within a pipe or other confined space. Some laser cladding heads used for these kinds of applications instead emit both beam and powder sideways from the end of a long wand that can be inserted between obstructions to access the workpiece and target point.

EP 2 711 759 A1 discloses a laser cladding system in accordance with the preamble of claim 1, and a method in accordance with the preamble of claim 10.

US 2011/297083 A1 discloses the preamble of claims 1 and 10 and relates to a laser cladding of tubes, US 2004/238504 A1 discloses a welding unit with miniaturized laser beam, and US 2012/261393 A1 discloses a modular system for surface welding inner surface of workpieces.

### SUMMARY

According to a first aspect of the present invention, there is provided a laser cladding system as set forth in claim 1.

According to a further aspect of the present invention, there is provided a method as set forth in claim 10.

The present summary is provided only by way of example, and not limitation. Other aspects of the present disclosure will be appreciated in view of the appended claims

### BRIEF DESCRIPTION OF THE DRAWINGS

FIG. 1 is a schematic view of a laser cladding system with a laser cladding head.
FIG. 2 is a perspective view of a laser optical path of the laser cladding head of FIG. 1
FIG. 3 is a perspective view of a borescope optical path of the laser cladding head of FIG. 1.
FIG. 4 is a close-up perspective view of a distal end of the borescope optical path of FIG. 3.
FIG. 5 is a transparent sectional view of the laser cladding head of FIG. 1 illustrating a portion of a protective gas system.
FIGs. 6 and 7 are cross-sectional perspective views of the laser cladding head of FIG. 1 illustrating flow paths of the gas system of FIG. 5.

While the above-identified figures set forth one or more embodiments of the present disclosure, other embodiments are also contemplated, as noted in the discussion. In all cases, this disclosure presents the invention by way of representation and not limitation. It should be understood that numerous other modifications and embodiments can be devised by those skilled in the art, which fall within the scope of the appended claims. The figures may not be drawn to scale, and applications and embodiments of the present invention may include features and components not specifically shown in the drawings.

### DETAILED DESCRIPTION

The present invention includes a laser cladding system with laser cladding head containing a long focal length focal array at a proximal end, and an indexable nonfocal turning mirror at a distal end. The focal array focuses a laser beam along a primary axis extending between proximal and distal ends of the cladding head. The turning mirror redirects the laser beam towards a target point a working distance away from the primary axis. Temperature sensors situated at the turning mirror are used to detect fault conditions, and the turning mirror is indexed by rotating it to expose a new portion of the turning mirror to impingement by the laser beam, thereby allowing the same turning mirror to be reused several times, despite sensed faults. The turning mirror is protected by a high-speed gas sheath that deflects debris and weld spatter away from the mirror. A gas knife reduces a risk that this high-speed gas sheath interferes with the weld, while additional jets of inert gas coaxial with powder jets prevent oxidation of the molten weld by reducing local oxygen concentration. The high precision welds enabled by this system necessitate high-resolution imaging. A borescope situated along the primary axis and directed towards the target point is used to provide an improved image.

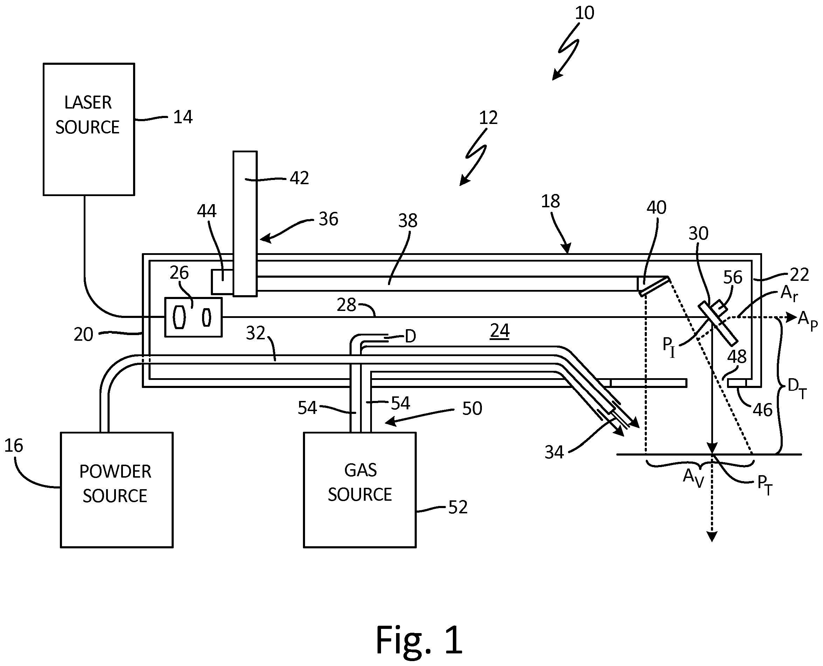

FIG. 1 is a schematic view of laser cladding system 10 with laser cladding head 12. Laser cladding head 12 receives collimated light from laser source 14 (e.g. via an optical fiber line) and weld material from powder source 16 (e.g. via a pressurized tube), and directs both weld material and focused, collimated light at target point P_{T} to perform welds and other repair operations. Laser cladding head 12 includes protective housing 18, which extends along primary axis Ap from proximal end 20 (near laser source 14 and powder source 16) and distal end 22 (near target point P_{T}). Protective housing 18 encloses interior space 24, which contains focal array 26, laser beam 28, turning mirror 30, powder line 32, powder nozzle 34, and borescope 38. Protective housing 18 can, for example, be a substantially cylindrical wand extending principally along primary axis Ap, and having a comparatively small diameter to enable access to target points situated in narrow or obstructed confines, e.g. within a tube or other enclosed workpiece.

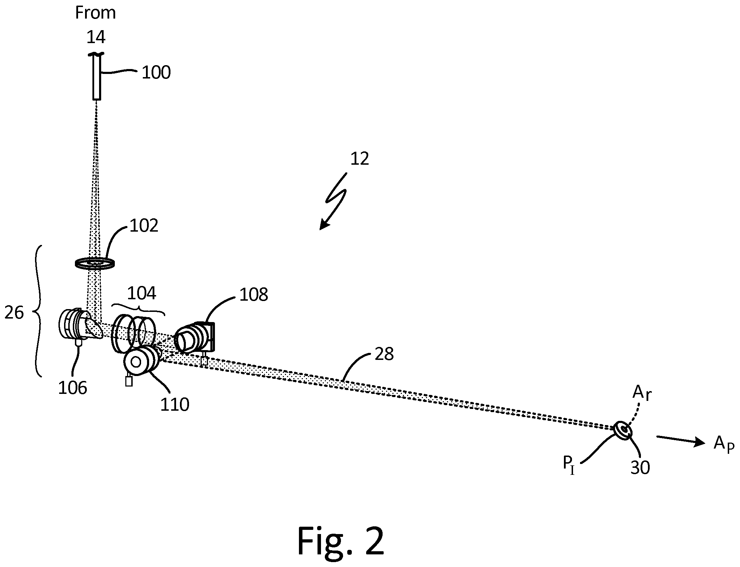

Focal array 26 is a lens, mirror, or cluster of optical elements with focal length *f*, that focuses collimated light from laser source 14 along primary axis Ap. Collimated light forms beam 28, which extends across the majority of the axial length of laser cladding head 12 and impinges on turning mirror 30 at impingement point P_{I}. Turning mirror 30 is a nonfocal mirror that redirects beam 28 in emission direction D_{E}, transverse to primary axis Ap, towards target point P_{T}. Turning mirror 30 can, in one embodiment, be a flat, gold-plated copper mirror. Turning mirror 30 is oriented along and rotatably anchored at rotational axis Aᵣ. Impingement point P_{I} on turning mirror 30 is separated from working point P_{T} by working distance D_{T}. By focusing beam 28 via focal array 26, rather than at turning mirror 30, the present invention is able to focus beam 28 over a long focal length *f*. In some embodiments, focal length *f* may be at least 400mm or 450mm. Focal length *f* is at least ten times working distance D_{T}, and in some embodiments at least thirty times working distance D_{T}. In at least some embodiments, working distance D_{T} can be less than 20mm. The long focal length f compared to working distance D_{T} allows beam 28 to be directed transverse to primary axis Ap (e.g. for weld operations in obstructed areas) without hypersensitivity to variation in working distance D_{T}. By pre-focusing beam 28 at focal array 26, near the proximal end of laser cladding head 12, focal length *f* can be substantially entire length of laser cladding head 12, or even slightly longer. Increased focal length *f* correspondingly allows increased tolerance to working distance D_{T} (i.e. ΔD_{T}), since ΔD_{T} ∞ f Increased tolerance allows laser cladding system 10 to be substantially insensitive to minor variations in working distance D_{T} that occur during normal weld operations. Focal array 26 and turning mirror 30 are described in greater detail below with respect to FIG. 2.

Powder source 16 provides weld material in the form of powder or pulverant metal via powder line 32. Weld material is supplied to target point P_{T} via powder nozzle 34. Although only a single powder nozzle is illustrated in the present schematic view, embodiments of the present invention can include a plurality of distinct nozzles, e.g. symmetrically distributed with respect to target point P_{T}. Beam 28 heats target material, forming a molten pool in the vicinity of target point P_{T} that incorporates weld material from powder nozzle 34.

Laser cladding system 10 also includes borescope 36. Borescope 36 includes borescope probe 38, imaging head 40, illumination source 42, and borescope camera 44, and is used to gather a high-resolution image of viewing area A_{V} around target point P_{T}. Long focal length *f* permits reliably tight focus of laser beam 28 at target point P_{T}, enabling high precision welds. Increase in the size of the impingement area of beam 28 on target point P_{T} due to the increased magnitude of focal length f can, in some embodiments, be compensated for by supplying collimated light from laser source 14 via a correspondingly lower-diameter optical fiber.

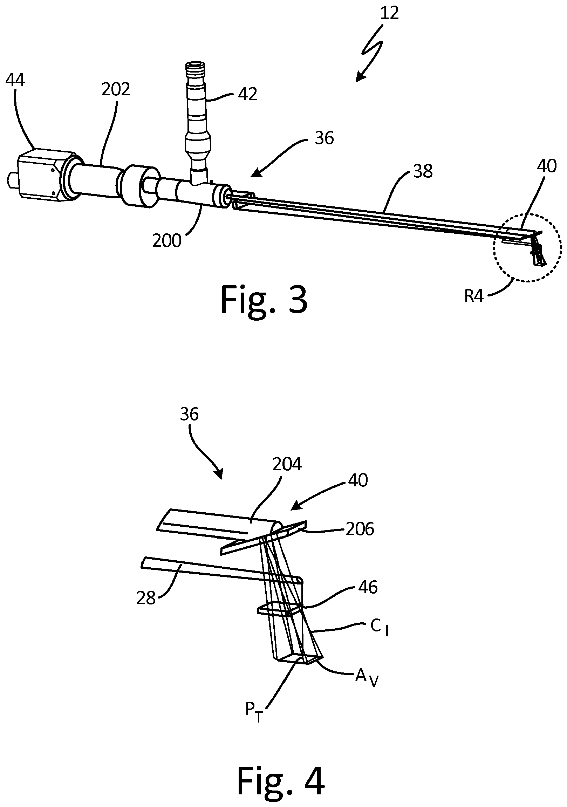

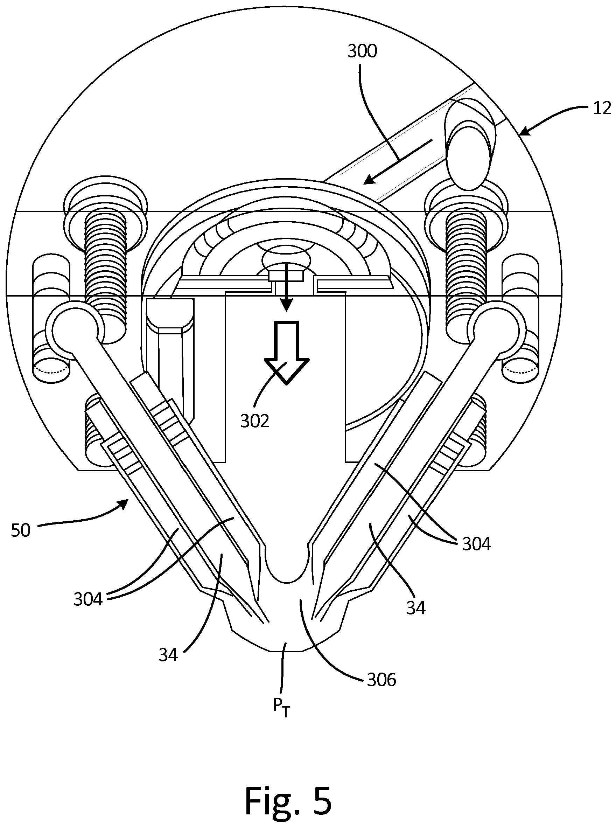

Borescope 36 facilitates high precision welds by providing the weld operator (whether human-controlled or automated) with correspondingly high resolution images of viewing area A_{V}, surrounding target point P_{T}. Borescope probe 38 extends parallel to primary axis A_{P}, from imaging head 40 to borescope camera 42. Imaging head 40 includes a mirror, prism, or array of mirrors and/or prisms directed at viewing area A_{V}, as well as a protective cover separating the interior of borescope 36 from interior space 24 of protective housing 18. In the illustrated embodiment, imaging head 40 is set back further than working distance D_{T} from target point P_{T}, so as to minimize debris and weld backspatter on imaging head 40. Borescope probe 38 attaches to illumination source 42 and borescope camera 44. Illumination source 42 supplies light (e.g. white) for imaging of viewing area A_{V}, and can for example be an LED light source. Borescope camera 44 can for example be a charge-coupled device (CCD) camera used to guide laser cladding head 12. In at least some embodiments protective housing 18 includes imaging window 46, a transparent section of protective housing 18 between imaging head 40 and viewing area A_{V}. In the illustrated embodiment, beam 28 passes through aperture 48, a hole in protective housing 18 situated within imaging window 48. Borescope 36 is described in greater detail below with respect to FIGs. 3 and 4, while imaging window 46 and aperture 48 are discussed in greater detail with respect to FIG. 5. In at least some embodiments borescope 36 is oriented in a viewing direction not parallel to the path of beam 28 between turning mirror 30 and target point P_{T}. This non-parallel orientation prevents turning mirror 30 from occluding the view of borescope 36, and additionally facilitates beam targeting by allowing the operator to gauge working distance D_{T} based on the location of the laser spot within viewing area A_{V}. In one embodiment, the viewing angle of borescope 36 is angled at 15-25° with respect to the emission angle of beam 28.

Laser cladding head 12 further includes gas system 50, which draws gas from gas source 52 through gas lines 54 to protect turning mirror 30 from debris and weld backspatter, and to exclude oxygenated air from the molten weld in the vicinity of target point P_{T} so as to avoid weld material oxidation. FIG. 1 only provides a simplified view of a section of gas system 50; gas system 50 is described in greater detail and in non-schematic form below with respect to FIGs. 5-7. In some embodiments weld material may be delivered via powder nozzle 34 using an independent gas source separate from gas system 50. In general, powder nozzle 34 can use the same gas or gasses handled by gas system 50 to deliver weld material, or can use other inert gasses depending on specific need and cost. Gas system 50 can, in some embodiments, utilize several different gasses (e.g. Argon, Helium) to propel weld material, protect molten weld material from oxidation, and shield sensitive components (such as turning mirror 30) from damage and fouling.

In at least some embodiments laser cladding head 12 includes temperature sensor 56, a thermocouple or similar temperature sensor device situated within or adjacent turning mirror 30. Temperature sensor 56 is used to detect an out-of-bounds temperature or rate of change of temperature at turning mirror 30 corresponding to an unacceptable maintenance condition due to fouling or damage. Fouling or damage reduce the reflectiveness of turning mirror 30, causing an increase in its heating at impingement point P_{I}. Temperature sensor 56 senses this temperature increase, e.g. as an increase in thermocouple voltage beyond a specified voltage threshold or faster than a specified rate, allowing laser cladding system 10 to recognize imminent failure conditions necessitating indexing or replacement of turning mirror 30.

The present invention uses turning mirror 30, a nonfocal optical element rather than a focal lens, to redirect axially-aligned beam 28 toward target point P_{T}. Protective housing 18 and gas system 50 cooperate to protect turning mirror 30 from damage and fouling from its proximity to the weld operation at target point P_{T}, which can for example be as close as 15-20mm away. Aperture 48 exposes only a small portion of turning mirror 30 around impingement point P_{I} to potential weld backspatter and debris, allowing the remainder of turning mirror 30 to stay clean and undamaged even when protective housing 18 and gas system 50 are insufficient to entirely protect turning mirror 30. Turning mirror 30 can then be indexed by rotating about rotational axis Aᵣ to situate impingement point P_{I} on a new, clean, undamaged portion of turning mirror 30 without causing any deviation in emission direction D_{E} of beam 28. In at least some embodiments, the narrow focus of beam 28 at impingement point P_{I} allows turning mirror 30 to be indexed at least five times in this fashion before no additional unused portion of turning mirror 30 is available. The present invention reduces operating expense not only by allowing turning mirror 30 to be reused through indexing, but by only situating turning mirror 30 proximate to the weld, rather than a more costly focal element such as focal array 26.

FIG. 2 is a perspective view of an optical path within laser cladding head 12, and illustrates focal array 26, beam 28, turning mirror 30, rotational axis Aᵣ, impingement point P_{I}, target point P_{T}, optical fiber 100, collimator lens 102, objective lens doublet 104, and alignment mirrors 106, 108, and 110.

Optical fiber 100 carries collimated light from laser source 14 to focal array 26. Focal array 26 includes collimator lens 102, objective lens doublet 104, and alignment mirrors 106, 108, and 110. Collimator lens 102 collimates the output of optical fiber 100, and alignment mirrors 106, 108, and 110 cooperate to align the beam. Alignment mirrors 106, 108, and 110 can be responsible for different components of beam alignment, i.e. for alignment in orthogonal dimensions. Collectively, alignment mirrors 106, 108, and 110 align beam 28 along primary axis Ap, thereby determining impingement point P_{I} on turning mirror 30 and target point P_{I}. In the illustrated embodiment, beam 28 is focused via objective lens doublet 104. More generally, focal array 26 can comprise any optical element or collection of elements that cooperate to align beam 28 with primary axis A_{P} and focus beam 28 with focal length f The full beam path of beam 28 from focal array 26 to target point P_{T} has length substantially equal to focal length *f*, such that target point P_{T} is aligned within a tolerance range ΔD_{T} of the adjusted focal point of beam 28. Tolerance range ΔD_{T} can, for example, be greater than 2mm due to long focal length *f*.

Turning mirror 30 is rotatable about rotational axis Aᵣ. Impingement point P_{I} is offset from rotational axis Aᵣ, such that for a given rotational alignment of turning mirror 30, only a small angular subset of turning mirror 30 is exposed to beam 28 and to the weld via aperture 48 (see FIG. 1). The size of turning mirror 30 determines the fractional angular subset of exposed mirror, with larger mirrors allowing a higher potential number of lifetime indexing operations.

FIGs. 3 and 4 are perspective views of borescope 36 alongside beam 28. FIG. 3 illustrates borescope probe 38, imaging head 40 illumination source 42, borescope camera 44, borescope body 200, and camera adaptor 202, and delineates region R4 around imaging head 40 and target point P_{T}. FIG. 4 is a close-up of beam 28 and imaging head 40 of borescope 36, and illustrates borescope tip 204, cover 206, target point P_{T}, viewing area A_{V}, and image cone C_{I}.

As discussed above with respect to FIG. 1, borescope 36 includes borescope probe 38, illumination source 42, and borescope camera 44. Borescope body 200 receives and redirects imaging light such as white light from illumination source 42, and redirects this light along borescope probe 38 towards imaging head 40. Borescope body 200 also attaches to camera adaptor 202, which conditions the optical output of borescope head 44 for processing by borescope camera 44. As noted above, borescope camera 44 can be a CCD camera or other electronic camera used to align laser cladding head 12 with a desired weld location.

As illustrated in FIG. 4, imaging head 40 includes borescope tip 204 and cover 206. Borescope tip 104 is a mirrored input that defines illumination cone C_{I} (the field of view of borescope 36), and thereby viewing area A_{V}. Borescope tip 204 is shielded by cover 206, which protects borescope tip 204 and screens undesired wavelengths to improve image quality, and protect the borescope from thermal damage. Cover 206 can, for example, be formed of IR reflective glass.

Beam 28 can, for example have a width of 0.2-0.3mm at target point P_{T}. In some embodiments, beam 28 is capable of impinging on the target point at a width less than 0.25mm. Borescope 36 provides an image of sufficiently high resolution to permit precise alignment of beam 28 at target point P_{T}, e.g. a resolution dimension of one fifth the beam width at target point P_{T}, or smaller. Compared to imaging via beam-path optics, borescope 36 also provides a wider view of the surroundings of target point P_{T}, allowing target point T_{P} to be more easily situated at a desired weld location.

FIG. 5 is a transparent sectional view of laser cladding 12 illustrating a portion of a gas system 50. In particular FIG. 5 illustrates two symmetrically distributed powder nozzles 34, high-speed gas line 300, and coaxial nozzles 304 producing gas shield 306 in the vicinity of target point P_{T}. Gas sheath 302 is supplied primarily by gas flow coaxial with beam 28, injected into internal space 24 to protect lens array 26 and turning mirror 30.

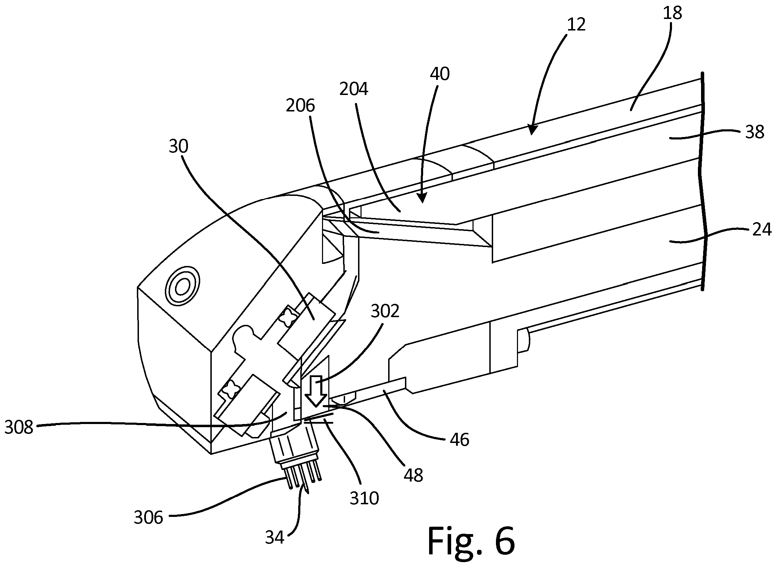

As noted above, powder nozzles 34 supply gas-driven jets of pulverant weld material. Powder nozzles 34 can, for example, carry pulverant weld material on a stream of Helium, Argon, or other inert gas or gasses. Power nozzles 34 supply weld material to target point P_{T} for incorporation in the molten weld. The weld can, however, give rise to both molten backspatter and flying debris in the form of uncaptured pulverant weld material. To prevent this material from impacting and damaging or fouling turning mirror 30, gas system 50 includes high-speed gas line 300, a high-speed gas outlet into interior space 24 (see FIG. 1) that can escape solely through aperture 48. As it escapes aperture 48, high-speed gas line 300 produces gas sheath 302, a pressurized gas jet that deflects debris and backspatter away from aperture 48. Gas sheath 302 can be expelled from aperture 48 towards target point P_{T}. The present invention can further include a gas knife (310; see FIG. 6, discussed below) that redirects gas sheath 302 away from target point P_{T}, thereby preventing gas sheath 302 from forming turbulent flow which may cause the weld being oxidized .

Coaxial nozzles 304 direct low-velocity inert gas towards the vicinity of target point P_{T}, producing gas shield 306. Coaxial nozzles 304 can, for example, carry argon gas from gas source 52. Gas shield 306 displaces or excludes oxygen from the immediate vicinity of the weld near target point P_{T}, thereby preventing oxidation of the molten weld material.

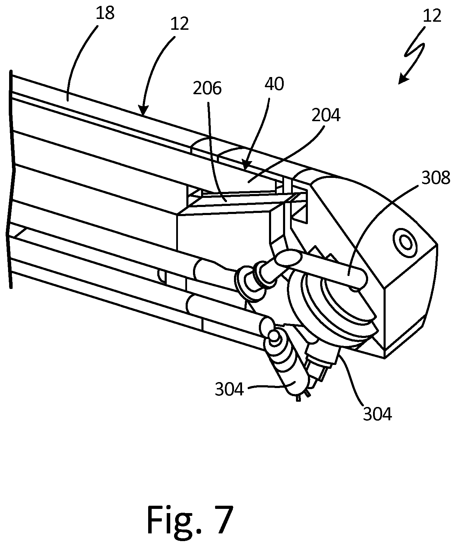

FIGs. 6 and 7 are cross-sectional perspective views of laser cladding head 12 along axial cross-sections, and illustrate protective housing 18, interior space 24, turning mirror 30, powder nozzle 34, imaging head 40 (with borescope tip 204 and cover 206 as described with respect to FIG. 3), imaging window 46 with aperture 48, and gas shield 306 all substantially as described above, as well as gas knife nozzle 308. FIG. 6 additionally illustrates gas sheath 302, gas knife nozzle 308, and gas knife 310.

As shown in FIG. 5, gas sheath 302 exits internal space 24 via aperture 48, coaxially with beam 28. A common gas inlet supplies high speed nozzle 300 and gas knife nozzle 308, while low-speed gas is passed near turning mirror 30 to provide protection and cooling. Gas flow within internal space 24 forms sheath flow 302 as it exits orifice 48. FIGs. 6 and 7 further illustrate the release of gas shield 306 coaxially with powder nozzle 34.

Gas knife nozzle 308 is routed through turning mirror 30 from behind, and directs inert gas, e.g. of the same type and from the same reservoir as high-speed nozzle 300, as gas knife 310. Gas knife 310 is a gas jet released laterally across viewing window 46, transverse to gas sheath 302, and serves to redirect gas sheath 302 away from target point P_{T} so as to avoid interfering with welding. Gas knife 310 also serves to redirect any weld spatter and/or powder away from internal space 24 so as to prevent contamination of turning mirror 30. Laser cladding head 12 is capable of performing weld tasks in confined or obstructed areas. Due to the long focal length *f* of focal array 26, the weld beam of cladding head 12 is largely insensitive to small changes in working distance. Temperature probe 56 ensures that turning mirror 30 is indexed or replaced whenever damage or fouling impedes its performance, and gas system 50 protects turning mirror 30 without interfering with the weld at target point P_{T}. Gas system 50 additionally supplies the weld location with inert gas to prevent the weld from oxidizing.

### Summation

Any relative terms or terms of degree used herein, such as "substantially", "essentially", "generally", "approximately" and the like, should be interpreted in accordance with and subject to any applicable definitions or limits expressly stated herein. In all instances, any relative terms or terms of degree used herein should be interpreted to broadly encompass any relevant disclosed embodiments as well as such ranges or variations as would be understood by a person of ordinary skill in the art in view of the the appended claims, such as to encompass ordinary manufacturing tolerance variations, incidental alignment variations, alignment or shape variations induced by thermal, rotational or vibrational operational conditions, and the like.

While the invention has been described with reference to an exemplary embodiment(s), it will be understood by those skilled in the art that various changes may be made and equivalents may be substituted for elements thereof without departing from the scope of the appended claims. In addition, many modifications may be made to adapt a particular situation or material to the teachings of the invention without departing from the appended claims.

Therefore, it is intended that the invention not be limited to the particular embodiment(s) disclosed, but that the invention will include all embodiments falling within the scope of the appended claims.

## Claims

1. A laser cladding system (10) configured to receive weld material from a powder source (16) and collimated light from a laser source (14), the laser cladding system (10) comprising:
a laser cladding head (12) extending along a primary axis (Ap) from a proximal end (20) to a distal end (22), the laser cladding head (12) comprising:
a mirror (30) situated at the distal end (22) to direct the collimated light in a beam (28) along an emission direction towards a target point (P_{T}) separated from the mirror (30) by a working distance (D_{T}); and
a powder nozzle (34) situated at the distal end (22) to supply the weld material to the target point (P_{T}) for melting by the beam (28), **characterised in that** the laser cladding system (10) further comprises:
a gas system (50) comprising:
a high-speed gas nozzle (304) disposed near the mirror (30), and configured to produce a gas sheath (302) coaxial with the beam (28) in a region between the mirror (30) and the target point (P_{T}), thereby shielding the mirror (30) from debris and molten backspatter from the target point (P_{T}); and
a gas knife (310) disposed, between the mirror (30) and the target point (P_{T}), such that the gas knife (310) redirects the gas sheath (302) away from the target point (P_{T}) and redirects debris and molten backspatter away from an interior of the laser cladding head (12), wherein:
the nonfocal mirror (30) is indexable by rotating the mirror (30) such that the impingement location (Pi) changes without altering the emission direction, and the laser cladding system is configured to sense failure conditions at the turning mirror (30) indicating fouling or damage to the turning mirror (30) by using a temperature sensor situated within or adjacent to the mirror (30); and
the laser cladding head (12) further comprises a focal array (26) at the proximal end (20) oriented to focus the collimated light substantially along the primary axis (A_{P}), impinging on the mirror (30) at an impingement location (P_{I}).

2. The laser cladding system (10) of claim 1, wherein the gas knife (310) is a gas jet disposed substantially transverse to the gas sheath (302).

3. The laser cladding system (10) of claim 1, wherein the gas knife (310) is a gas jet disposed substantially parallel to the turning mirror (30).

4. The laser cladding system (10) of any preceding claim, wherein the gas system (50) further comprises a low-speed inert gas nozzle (304) directed towards the target point (P_{T}) such that oxygen density in the vicinity of the target point (P_{T}) is reduced.

5. The laser cladding system (10) of claim 4, wherein the low-speed inert gas nozzle (304) is situated coaxially about the powder nozzle (34).

6. The laser cladding system (10) of any preceding claim, wherein the focal array (26) has a focal length (f) at least thirty times greater than the working distance (D_{T}).

7. The laser cladding system (10) of claim 5 or 6, wherein the nonfocal mirror (30) is indexable at least five times.

8. The laser cladding system (10) of any preceding claim, further comprising a boroscope (36) disposed along the primary axis (Ap) of the laser cladding head (12), and having an imaging head (40) at the distal end (22) directed toward the target point (P_{T}), optionally wherein the beam (28) has a width at the target point (P_{T}) that is at least five times greater than a resolution of the borescope (36).

9. The laser cladding system (10) of claim 8, wherein the imaging head (40) is separated from the target point (P_{T}) by more than the working distance (D_{T}).

10. A method of operating a laser cladding system (10), the method comprising:
focusing a laser beam (28) along a primary axis (Ap) using a focal array (26);
supplying weld material via a powder nozzle (34) to a target (P_{T}) location offset from the primary axis (Ap) by a working distance (D_{T}); and
redirecting the laser beam (28) in an emission direction transverse to the primary axis (Ap) via a nonfocal turning mirror (30), towards the target point (P_{T}), **characterised in that** the method further comprises:
deflecting debris and molten backspatter away from the turning mirror (30) via a high-speed gas sheath (302);
sensing failure conditions at the turning mirror (30) indicating fouling or damage to the turning mirror (30) by using a temperature sensor situated within or adjacent the mirror (30);
indexing the turning mirror (30) to change which portion of the turning mirror (30) the laser beam (28) impinges upon, without changing the emission direction; and
redirecting the high-speed gas sheath (302) away from the target point (P_{T}) via a gas knife (310) situated between turning mirror (30) and the target point (P_{T}).

11. The method of claim 10, wherein the high-speed gas sheath (302) is coaxial with the laser beam (28) in a region between the turning mirror (30) and the target point (P_{T}).

12. The method of claim 10 or 11, further comprising directing a stream of inert gas transverse to the primary axis (A_{P}), to cover the target point (P_{T}), thereby excluding oxygen from the vicinity of the target point (P_{T}).

13. The method of claim 12, wherein the stream of inert gas is supplied via a flow coaxial to the powder nozzle (34).

14. The method of any of claims 10 to 13, wherein sensing failure conditions comprises detecting any out-of-bounds increase in temperature at the turning mirror (30).

15. The method of any of claims 10 to 14, further comprising performing at least one action from the group consisting of replacing, repairing, and cleaning the turning mirror (30) after it has been indexed at least five times.

## Patentansprüche

1. Laserplattierungssystem (10), das dazu konfiguriert ist, Schweißmaterial von einer Pulverquelle (16) und kollimiertes Licht von einer Laserquelle (14) zu empfangen, wobei das Laserplattierungssystem (10) Folgendes umfasst:
einen Laserplattierungskopf (12), der sich entlang einer Hauptachse (Ap) von einem proximalen Ende (20) zu einem distalen Ende (22) erstreckt, wobei der Laserplattierungskopf (12) Folgendes umfasst:
einen Spiegel (30), der sich am distalen Ende (22) befindet, um das kollimierte Licht in einem Strahl (28) entlang einer Emissionsrichtung in Richtung eines Zielpunktes (P_{T}) zu leiten, der von dem Spiegel (30) um einen Arbeitsabstand (D_{T}) getrennt ist; und
eine Pulverdüse (34), die sich am distalen Ende (22) befindet, um das Schweißmaterial zum Zielpunkt (P_{T}) zum Schmelzen durch den Strahl (28) zuzuführen, **dadurch gekennzeichnet, dass** das Laserplattierungssystem (10) ferner Folgendes umfasst:
ein Gassystem (50), das Folgendes umfasst:
eine Hochgeschwindigkeitsgasdüse (304), die in der Nähe des Spiegels (30) angeordnet und dazu konfiguriert ist, in einem Bereich zwischen dem Spiegel (30) und dem Zielpunkt (P_{T}) eine Gashülle (302) koaxial zum Strahl (28) zu erzeugen, wodurch der Spiegel (30) vor Schmutz und geschmolzenen Rückspritzern vom Zielpunkt (P_{T}) geschützt wird; und
ein derartig zwischen dem Spiegel (30) und dem Zielpunkt (P_{T}) angeordnetes Gasmesser (310), dass das Gasmesser (310) die Gashülle (302) von dem Zielpunkt (P_{T}) weg umlenkt und Trümmer und geschmolzene Rückspritzer weg von einem Inneren des Laserplattierungskopfes (12) umlenkt, wobei:
der nichtfokale Spiegel (30) durch derartiges Drehen des Spiegels (30) indexierbar ist, dass sich die Auftreffstelle (P_{I}) ändert, ohne die Emissionsrichtung zu verändern, und das Laserplattierungssystem dazu konfiguriert ist,
Fehlerbedingungen an dem Drehspiegel (30), die Verschmutzung oder Beschädigung des Drehspiegels (30) anzugeben, durch Verwendung eines Temperatursensors, der sich innerhalb des Spiegels (30) oder angrenzend an denselben befindet, zu erfassen; und
der Laserplattierungskopf (12) ferner eine Fokusanordnung (26) am proximalen Ende (20) umfasst, die dazu ausgerichtet ist, das kollimierte Licht im Wesentlichen entlang der Hauptachse (A_{P}) zu fokussieren, das an einer Auftreffstelle (P_{I}) auf den Spiegel (30) auftrifft.

2. Laserplattierungssystem (10) nach Anspruch 1, wobei das Gasmesser (310) ein Gasstrahl ist, der im Wesentlichen quer zu der Gashülle (302) angeordnet ist.

3. Laserplattierungssystem (10) nach Anspruch 1, wobei das Gasmesser (310) ein Gasstrahl ist, der im Wesentlichen parallel zu dem Drehspiegel (30) angeordnet ist.

4. Laserplattierungssystem (10) nach einem der vorhergehenden Ansprüche, wobei das Gassystem (50) ferner eine Inertgasdüse (304) mit niedriger Geschwindigkeit umfasst, die derartig in Richtung des Zielpunktes (P_{T}) gerichtet ist, dass die Sauerstoffdichte in der Nähe des Zielpunktes (P_{T}) verringert ist.

5. Laserplattierungssystem (10) nach Anspruch 4, wobei sich die Inertgasdüse (304) mit niedriger Geschwindigkeit koaxial um die Pulverdüse (34) herum befindet.

6. Laserplattierungssystem (10) nach einem der vorhergehenden Ansprüche, wobei die Fokusanordnung (26) eine Brennweite (f) aufweist, die mindestens dreißigmal größer als der Arbeitsabstand (D_{T}) ist.

7. Laserplattierungssystem (10) nach Anspruch 5 oder 6, wobei der nichtfokale Spiegel (30) mindestens fünfmal indexierbar ist.

8. Laserplattierungssystem (10) nach einem der vorhergehenden Ansprüche, das ferner ein Endoskop (36) umfasst, das entlang der Hauptachse (A_{P}) des Laserplattierungskopfes (12) angeordnet ist und einen Abbildungskopf (40) am distalen Ende (22) aufweist, das in Richtung des Zielpunktes (P_{T}) gerichtet ist, wobei optional der Strahl (28) am Zielpunkt (P_{T}) eine Breite aufweist, die mindestens fünfmal größer als eine Auflösung des Endoskops (36) ist.

9. Laserplattierungssystem (10) nach Anspruch 8, wobei der Abbildungskopf (40) von dem Zielpunkt (P_{T}) um mehr als den Arbeitsabstand (D_{T}) getrennt ist.

10. Verfahren zum Betreiben eines Laserplattierungssystems (10), wobei das Verfahren Folgendes umfasst:
Fokussieren eines Laserstrahls (28) entlang einer Hauptachse (A_{P}) unter Verwendung einer Fokusanordnung (26);
Zuführen von Schweißmaterial über eine Pulverdüse (34) zu einer Zielstelle (P_{T}), die von der Hauptachse (A_{P}) um einen Arbeitsabstand (D_{T}) versetzt ist; und
Umlenken des Laserstrahls (28) in eine Emissionsrichtung quer zur Hauptachse (A_{P}) über einen nichtfokalen Drehspiegel (30) in Richtung des Zielpunktes (P_{T}), **dadurch gekennzeichnet, dass** das Verfahren ferner Folgendes umfasst:
Ablenken von Trümmern und geschmolzenen Rückspritzern weg von dem Drehspiegel (30) über eine Hochgeschwindigkeitsgashülle (302) ;
Erfassen von Fehlerzuständen am Drehspiegel (30), die eine Verschmutzung oder Beschädigung des Drehspiegels (30) angeben, unter Verwendung eines Temperatursensors, der sich innerhalb des Spiegels (30) oder angrenzend an denselben befindet;
Indizieren des Drehspiegels (30), um zu ändern, auf welchen Abschnitt des Drehspiegels (30) der Laserstrahl (28) auftrifft, ohne die Emissionsrichtung zu ändern; und
Umlenken der Hochgeschwindigkeitsgashülle (302) weg von dem Zielpunkt (P_{T}) über ein Gasmesser (310), das sich zwischen dem Drehspiegel (30) und dem Zielpunkt (P_{T}) befindet.

11. Verfahren nach Anspruch 10, wobei die Hochgeschwindigkeitsgashülle (302) koaxial mit dem Laserstrahl (28) in einem Bereich zwischen dem Drehspiegel (30) und dem Zielpunkt (P_{T}) ist.

12. Verfahren nach Anspruch 10 oder 11, das ferner Richten eines Inertgasstroms quer zur Hauptachse (A_{P}) umfasst, um den Zielpunkt (P_{T}) zu bedecken, wodurch Sauerstoff aus der Nähe des Zielpunktes (P_{T}) ausgeschlossen wird.

13. Verfahren nach Anspruch 12, wobei der Inertgasstrom über eine zur Pulverdüse (34) koaxiale Strömung zugeführt wird.

14. Verfahren nach einem der Ansprüche 10 bis 13, wobei das Erfassen von Ausfallbedingungen Detektieren eines Temperaturanstiegs außerhalb der Grenzen am Drehspiegel (30) umfasst.

15. Verfahren nach einem der Ansprüche 10 bis 14, das ferner Durchführen von mindestens einer Aktion aus der Gruppe bestehend aus Ersetzen, Reparieren und Reinigen des Drehspiegels (30) umfasst, nachdem er mindestens fünfmal indexiert wurde.

## Revendications

1. Système de revêtement au laser (10) configuré pour recevoir un matériau de soudure provenant d'une source de poudre (16) et une lumière collimatée provenant d'une source laser (14), le système de revêtement au laser (10) comprenant :
une tête de revêtement au laser (12) s'étendant le long d'un axe principal (Ap) à partir d'une extrémité proximale (20) jusqu'à une extrémité distale (22), la tête de revêtement au laser (12) comprenant :
un miroir (30) situé à l'extrémité distale (22) pour diriger la lumière collimatée en un faisceau (28) selon une direction d'émission vers un point cible (P_{T}) séparé du miroir (30) par une distance de travail (D_{T}) ; et
une buse à poudre (34) située à l'extrémité distale (22) pour amener le matériau de soudure au point cible (P_{T}) pour une fusion par le faisceau (28), **caractérisé en ce que** le système de revêtement au laser (10) comprend en outre :
un système de gaz (50) comprenant :
une buse à gaz à grande vitesse (304) disposée près du miroir (30), et configurée pour produire une gaine de gaz (302) coaxiale au faisceau (28) dans une région entre le miroir (30) et le point cible (P_{T}), protégeant ainsi le miroir (30) de débris et de rétroprojections fondues provenant du point cible (P_{T}) ; et
une lame de gaz (310) disposée, entre le miroir (30) et le point cible (P_{T}), de sorte que la lame à gaz (310) redirige la gaine de gaz (302) à l'écart du point cible (P_{T}) et redirige des débris et des rétroprojections fondues à l'écart d'un intérieur de la tête de revêtement au laser (12), dans lequel :
le miroir non focal (30) est indexable en faisant tourner le miroir (30) de sorte que l'emplacement d'impact (P_{I}) change sans modifier la direction d'émission, et le système de revêtement au laser est configuré pour détecter des conditions de défaillance au niveau du miroir tournant (30) indiquant un encrassement ou un endommagement du miroir tournant (30)à l'aide d'un capteur de température situé à l'intérieur ou à côté du miroir (30) ; et
la tête de revêtement au laser (12) comprend en outre un réseau focal (26) à l'extrémité proximale (20) orienté pour focaliser la lumière collimatée sensiblement le long de l'axe principal (A_{P}), frappant le miroir (30) au niveau d'un emplacement d'impact .

2. Système de revêtement au laser (10) selon la revendication 1, dans lequel la lame de gaz (310) est un jet de gaz disposé sensiblement transversalement à la gaine de gaz (302).

3. Système de revêtement au laser (10) selon la revendication 1, dans lequel la lame de gaz (310) est un jet de gaz disposé sensiblement parallèlement au miroir tournant (30).

4. Système de revêtement au laser (10) selon une quelconque revendication précédente, dans lequel le système de gaz (50) comprend en outre une buse à gaz inerte à faible vitesse (304) dirigée vers le point cible (P_{T}) de sorte que la densité d'oxygène au voisinage du point cible (P_{T}) est réduite.

5. Système de revêtement au laser (10) selon la revendication 4, dans lequel la buse à gaz inerte à basse vitesse (304) est située coaxialement autour de la buse à poudre (34).

6. Système de revêtement au laser (10) selon une quelconque revendication précédente, dans lequel le réseau focal (26) a une distance focale (f) au moins trente fois supérieure à la distance de travail (D_{T}).

7. Système de revêtement au laser (10) selon la revendication 5 ou 6, dans lequel le miroir non focal (30) est indexable au moins cinq fois.

8. Système de revêtement au laser (10) selon une quelconque revendication précédente, comprenant en outre un boroscope (36) disposé le long de l'axe principal (A_{P}) de la tête de revêtement au laser (12), et ayant une tête d'imagerie (40) à l'extrémité distale (22) dirigée vers le point cible (P_{T}), éventuellement dans lequel le faisceau (28) a une largeur au niveau du point cible (P_{T}) qui est au moins cinq fois supérieure à une résolution de l'endoscope (36).

9. Système de revêtement au laser (10) selon la revendication 8, dans lequel la tête d'imagerie (40) est séparée du point cible (P_{T}) par plus de la distance de travail (D_{T}).

10. Procédé de fonctionnement d'un système de revêtement au laser (10), le procédé comprenant :
la focalisation d'un faisceau laser (28) le long d'un axe principal (A_{P}) à l'aide d'un réseau focal (26) ;
l'acheminement du matériau de soudure via une buse à poudre (34) jusqu'à un emplacement cible (P_{T}) décalé de l'axe principal (A_{P}) par une distance de travail (D_{T}) ; et
la redirection du faisceau laser (28) dans une direction d'émission transversale à l'axe principal (A_{P}) via un miroir tournant non focal (30), vers le point cible (P_{T}), **caractérisé en ce que** le procédé comprend en outre :
la déviation de débris et de rétroprojections fondues à l'écart du miroir tournant (30) via une gaine de gaz à grande vitesse (302) ;
la détection de conditions de défaillance au niveau du miroir tournant (30) indiquant un encrassement ou un endommagement du miroir tournant (30) à l'aide d'un capteur de température situé à l'intérieur ou à côté du miroir (30) ;
l'indexation du miroir tournant (30) pour changer la partie du miroir tournant (30) sur laquelle le faisceau laser (28) frappe, sans changer la direction d'émission ; et
la redirection de la gaine de gaz à grande vitesse (302) à l'écart du point cible (P_{T}) via une lame de gaz (310) située entre le miroir tournant (30) et le point cible (P_{T}).

11. Procédé selon la revendication 10, dans lequel la gaine de gaz à grande vitesse (302) est coaxiale au faisceau laser (28) dans une région entre le miroir tournant (30) et le point cible (P_{T}).

12. Procédé selon la revendication 10 ou 11, comprenant en outre la direction d'un courant de gaz inerte transversal à l'axe principal (A_{P}), pour couvrir le point cible (P_{T}), excluant ainsi l'oxygène du voisinage du point cible (P_{T}).

13. Procédé selon la revendication 12, dans lequel le courant de gaz inerte est acheminé via un flux coaxial à la buse à poudre (34) .

14. Procédé selon l'une quelconque des revendications 10 à 13, dans lequel la détection de conditions de défaillance comprend la détection de toute augmentation hors limites de température au niveau du miroir tournant (30).

15. Procédé selon l'une quelconque des revendications 10 à 14, comprenant en outre l'exécution d'au moins une action du groupe constitué du remplacement, de la réparation et du nettoyage du miroir tournant (30) après qu'il a été indexé au moins cinq fois.
